# EUROPEAN PATENT SPECIFICATION

(11) **EP 4 430 802 B1**
(45) Date of publication and mention of the grant of the patent: **13.08.2025**
(21) Application number: 21810568.2
(22) Date of filing: 10.11.2021
(51) Int. Cl.: H04L 9/40

(54) **LAWFUL INTERCEPTION METHOD, COMMUNICATION DEVICES AND SYSTEM**
RECHTMÄSSIGE ABHÖRMETHODE, KOMMUNIKATIONSGERÄTE UND SYSTEM
INTERCEPTION, COMMUNICATION ET SYSTÈME LICITES

(43) Date of publication of application: 18.09.2024
(73) Proprietor: Telefonaktiebolaget LM Ericsson (publ), 164 83 Stockholm (SE)
(72) Inventor: IMBIMBO, Amedeo, 80023 CAIVANO (NA) (IT); FIORILLO, Lorenzo, 81020 San Nicola la Strada (CE) (IT)
(74) Representative: Ericsson
(86) International application number: PCT/EP2021/081208
(87) International publication number: WO 2023/083441

(56) References cited:
- US-A1- 2010 316 195
- US-A1- 2011 055 910
- US-A1- 2011 269 430
- "Lawful Interception (LI); Requirements of Law Enforcement Agencies", ETSI DRAFT; 23LITD005_TS_101_331_V131, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V1.3.1, 14 October 2009 (2009-10-14), pages 1 - 30, XP014062810
- "Lawful Interception (LI); Handover interface for the lawful interception of telecommunications traffic", vol. LI, no. V3.2.1, 20 March 2018 (2018-03-20), pages 1 - 128, XP014319139, Retrieved from the Internet <URL:http://www.etsi.org/deliver/etsi_es/201600_201699/201671/03.02.01_50/es_201671v030201m.pdf> [retrieved on 20180320]

## Description

### TECHNICAL FIELD

The invention relates to a method of establishing lawful interception in a telecommunication network. The invention further relates to communication devices and to a lawful interception system.

### BACKGROUND

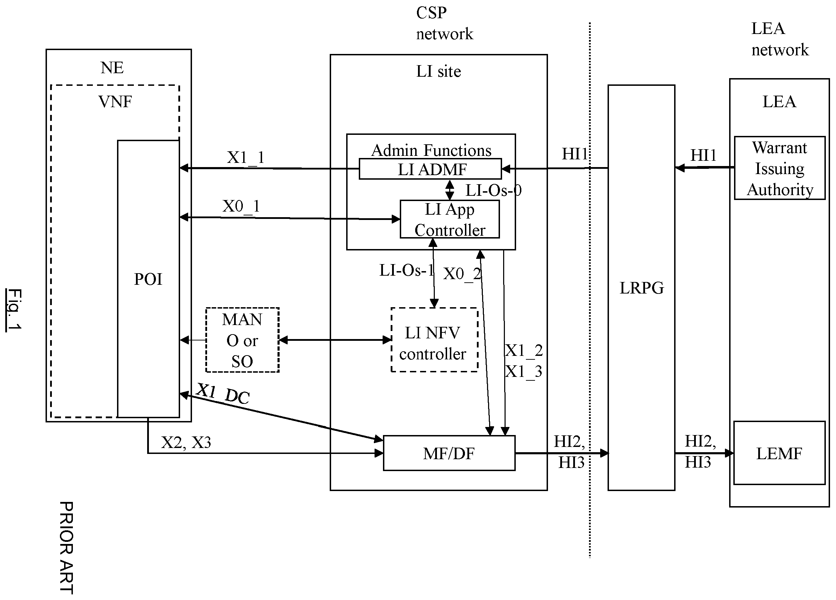

Figure 1 shows an exemplary Lawful Interception, LI, network and system according to document ETSI GR NFV-SEC 011 V1.1.1. Figure 1 shows a high-level architecture for lawful interception in a virtualized environment. Entities are logically represented, therefore it does not necessary reflect separate physical entities. Entities will be described herein for a non-virtualized environment and for a virtualized environment.

The exemplary LI system comprises a Law Enforcement Agency, LEA, network and a Communications Service Provider, CSP, network. LEA is an organization authorized by a lawful authorization based on the applicable jurisdiction to request and receive the results of telecommunications interceptions of an interception target. The target is a person of interest and/or user equipment possessed or used by the person of interest being surveyed by the LEA. Said LEA communicates with the CSP network through a network interface, called Handover Interface, HI. LEA comprises a Warrant Issuing Authority/Warrant Issuing Authority device and a Law Enforcement Monitoring Facility, LEMF. The Warrant Issuing Authority 102 issues an intercept request, e.g. lawful authorization or warrant to the CSP through a first Handover Interface, HI1. The LEMF collects the intercepted information of the interception target. The LEMF communicates with an LI site through a second Handover Interface, HI2, for receiving Intercept Related Information, IRI, and through a third Handover Interface, HI3, for receiving Content of Communication, CC. Interfaces HI1, HI2, and HI3 are specified in more detail in the ETSI TS 102 232-1 V3.21.1 standard, "Lawful Interception (LI); Part 1: Internal Network Interface X1 for Lawful Interception".

Entities within the CSP network communicate through internal network interfaces.

The LI site comprises an LI Administration Function, ADMF, and a Mediation and Delivery Function, MF/DF. The LI ADMF communicates with the MF/DF through an X1_2 interface and an X1_3 interface. The LI ADMF generate, based on said received intercept request, a warrant comprising one or more interception target identities, and send the warrant to a Point Of Interception, POI, 107, within an NE via an interface denoted by X1_1; the NE is an entity that performs the interception. Said POI detects the interception target communication, derives the IRI or CC from the target communications, and delivers the POI Output to the MD/MF. POls are divided into two types based on the type of data they send to the MF/DF: IRI-POI delivers Intercept Related Information to the MF through an X2 interface and CC-POI delivers CC to the MF through an X3 interface. IRI are collection of information or data associated with telecommunications services involving the interception target identity, specifically call associated information or data (e.g. unsuccessful call attempts), service associated information or data (e.g. service profile management by subscriber) and location information. The CC is information exchanged between two or more users of a telecommunications service, excluding IRI. The MF receives IRI and CC and transforms them from internal interface format to Handover Interface format. The DF will then handle dispatching of said data to the one or more designated LEAs 101.

In a Network Functions Virtualization, NFV, environment, MF/DF and POI may be embedded within a Network Function, NF. In this scenario, an X1_DC interface is used by a virtualized POI, vPOI and virtualized MF/DF, vMF/vDF to inform each other of changes (e.g. scaling or mobility) in the virtualized environment. An NFV Management and Orchestration function, MANO, and/or a Security Orchestrator, SO, handle the management and orchestration of all resources in a virtualized data center including computing, networking, storage, and virtual machine, VM, resources. An LI controller is responsible for creating, modifying, deleting, and auditing vPOI and vMF/vDF configuration during their lifecycle. The LI controller has two sub-functions: LI controller at network service application level, called LI App Controller, and LI controller at NFV level, called LI NFV controller. LI App Controller and LI ADMF communicate through an LI-Os-0 interface; LI App controller and vPOI communicate through an X0_1 interface; LI App controller 110 and vMF/vDF communicate through an X0_2 interface. The LI NFV controller is managed by the LI App controller via an LI-OS-1 interface. X1_DC, X0_1, X0_2, LI-OS-0 and LI-OS-1 interfaces are specified in more detail in ETSI GR NFV-SEC 011 V1.1.1.

A Lawful Interception Routing Proxy Gateway, LRPG, can be used to provide a Handover Interface proxy function to isolate the LEMF 103 and prevent the LEMF to be visible to MANO. This function is optional.

The intercept request issued by the Warrant Issuing Authority includes an identity of an LI target of interest. The target of interest may move around and the service to which they are subscribed may change or the user equipment that they are using may fallback to a different service, which may result in the target of interest using a different identity.

US 2011/055910 A1 discloses a method for user-centric interception in a telecommunication system wherein correlated identities are federated in an Identity Management Controller.

### SUMMARY

It is an object to enable improved lawful interception capability within a communication network.

A first aspect provides a method of establishing lawful interception, LI, of an LI target within a telecommunication network. The method comprises, at a communication device hosting an LI administrative function, ADMF, receiving from a Law Enforcement Monitoring Facility, LEMF, a first request message and sending a second request message to a user register. The first request message includes a target identifier comprising a known identity of an LI target and a request for additional identities associated with the known identity. The known identity is an identity known by the LEMF. The second request message is requesting additional identities associated with the known identity. The method further comprises, at a communication device hosting the user register, receiving the second request message, obtaining from the user register at least one additional identity associated with the known identity and sending a message to a lawful interception delivery function, LI DF. The message includes said at least one additional identity associated with the known identity obtained from the user register. The method further comprises, at a communication device hosting the LI DF, receiving the message, and sending an intercept related information, IRI, message to the LEMF. The IRI message includes said at least one additional identity associated with the known identity.

The method may enable improved lawful interception, LI, monitoring of an LI target when not all of the identities of an LI target are known by a law enforcement agency, LEA, and thus by an LEMF. The method may enable an LEA that has a known identity of an LI target to obtain other identities of the target, currently unknown by the LEA, so that LI monitoring may be performed on further services to which the LI target is subscribed. The method enables additional known identities of the target to be reported to the LEMF, and thus to the LEA, soon after the LI is activated at the user register, such as the unified data management, UDM, function or home subscriber server, HSS, of a communication network. The method advantageously performs reporting to an LEMF/LEA of additional known identities of an LI target, so that is possible to activate (without any delay) the interception on further services the target accesses, improving continuity of the monitoring while the target moves around.

The method advantageously improves lawful interception coverage within a multi-service, multi-technology communication network, by enabling an LI target to be intercepted even when its technical identity changes while moving within the network, changing services and technology.

In an embodiment, the known identity is a subscriber identity. Additional identities are a subscriber identity. The additional identities are different to the known identity.

In an embodiment, the known identity is for a first network operating using a first network technology and at least one additional identity is for another network operating using a different network technology to the first network technology. The method advantageously performs reporting to an LEA of all known identities of an LI target, so that is possible to activate (without any delay) the interception on any service the target accesses and ensuring continuity of the monitoring while the target moves around, including moving between different network technologies, for example from 4G to 5G or vice versa.

In an embodiment, the other network is configured to support fallback from the first network of a service associated with the known identity. This advantageously ensures continuity of the monitoring while the target moves around and network fallback occurs, for example from 5G to 4G or 3G.

In an embodiment, the subscriber identity is at least one of a Subscriber Permanent Identifier, SUPI, a Generic Public Subscription Identifier, GPSI, a Permanent Equipment Identifier, PEI, a Mobile Station International Subscriber Directory Number, MSISDN, an international mobile subscriber identity, IMSI, a Session Initiation Protocol, SIP, Uniform Resource Identifier, URI, a telephone URI, TEL URI, a GPSI, an Internet Protocol, IP, multimedia private identity, IMPI, an IP multimedia public identity, IMPU, a globally routable user agent URI, GRUU, or a wildcarded public user identity expressing a set of IMPU. The method enables LI monitoring of a target UE to be initiated using a known identity of the LI target on a 5G mobile network and enables additional identities, for different generation mobile networks, to be provided to the LEA so that LI monitoring can continue if the target changes to a service on a different generation mobile network, i.e. on a different network technology, including, for example, the case network fallback from, for example, 5G to 4G or 3G.

In an embodiment, the first request message is received on an LI Handover Interface 1, LI HI1, interface. The second request message is sent on an LI X1 interface. The message sent from the user register to the LI DF is sent on an LI X2 interface. The IRI message is sent on an LI Handover Interface 2, LI HI2, interface. The method advantageously uses the LI Handover Interface 2 to enable reporting to the LEA all known user identities of an LI target.

In an embodiment, the method further comprises generating at least one provisioning message comprising instructions configured to cause at least one point of interception to be provisioned for the LI target within the telecommunication network.

Corresponding embodiments and advantages also apply to the communication devices and LI system described below.

A second aspect provides a communication device comprising interface circuitry, at least one processor and memory comprising instructions which when performed by the at least one processor cause the communication device to perform lawful interception, LI, administrative function, ADMF operations. The ADMF operations comprise receiving from a Law Enforcement Monitoring Facility, LEMF, a first request message and sending a second request message to a user register. The first request message includes a target identifier comprising a known identity of an LI target and a request for additional identities associated with the known identity. The second request message is requesting additional identities associated with the known identity.

In an embodiment, the known identity is for a first network operating using a first network technology and at least one additional identity is for another network operating using a different network technology to the first network technology.

In an embodiment, the known identity is a subscriber identity; and additional identities are a subscriber identity, wherein the additional identities are different identities to the known identity.

In an embodiment, subscriber identity is at least one of a Subscriber Permanent Identifier, SUPI, a Generic Public Subscription Identifier, GPSI, a Permanent Equipment Identifier, PEI, a Mobile Station International Subscriber Directory Number, MSISDN, an international mobile subscriber identity, IMSI, a Session Initiation Protocol, SIP, Uniform Resource Identifier, URI, a telephone URI, TEL URI, a GPSI, an Internet Protocol, IP, multimedia private identity, IMPI, an IP multimedia public identity, IMPU, a globally routable user agent URI, GRUU, or a wildcarded public user identity expressing a set of IMPU. The method enables LI monitoring of a target UE to be initiated using a known identity of the LI target on a 5G mobile network and enables additional identities, for different generation mobile networks, to be provided to the LEA so that LI monitoring can continue if the target changes to a service on a different generation mobile network, i.e. on a different network technology, including, for example, the case network fallback from, for example, 5G to 4G or 3G.

In an embodiment, the first request message is received on an LI Handover Interface 1, LI HI1, interface. The second request message is sent on an LI X1 interface.

In an embodiment, the LI ADMF operations further comprise generating at least one provisioning message comprising instructions configured to cause at least one point of interception to be provisioned for the LI target within a telecommunication network.

A third aspect provides a communication device comprising interface circuitry, at least one processor and memory comprising instructions which when performed by the at least one processor cause the communication device to host a user register and to perform user register operations. The user register operations comprise receiving a request message from a lawful interception, LI, administrative function, ADMF, obtaining from the user register at least one additional identity associated with the known identity and sending a message to a lawful interception delivery function, LI DF. The request message is requesting additional identities associated with a known identity of an LI target. The message includes said at least one additional identity associated with the known identity obtained from the user register.

In an embodiment, the request message is received on an LI X1 interface and the message sent to the LI DF is sent on an LI X2 interface.

A fourth aspect provides a communication device comprising interface circuitry, at least one processor and memory comprising instructions which when performed by the at least one processor cause the communication device to perform lawful interception, LI, delivery function operations. The lawful interception delivery function operations comprise receiving a message from a user register and sending an intercept related information, IRI, message to a Law Enforcement Monitoring Facility, LEMF. The message received from the user register includes at least one additional identity associated with a known identity of an LI target. The IRI message includes said at least one additional identity associated with the known identity.

In an embodiment, the message received from the user register is received on an LI X2 interface and the IRI message is sent on an LI Handover Interface 2, LI HI2, interface.

A fifth aspect provides a computer program comprising instructions which, when executed on at least one processor, cause the at least one processor to carry out any of the above steps of the method of establishing lawful interception, LI, in a telecommunication network
A sixth aspect provides a lawful interception, LI, system comprising a first communication device, a second communication device and a third communication device. The first communication device comprises interface circuitry, at least one processor and memory comprising instructions which when performed by the at least one processor cause the communication device to perform lawful interception, LI, administrative function, ADMF operations. The ADMF operations comprise receiving from a Law Enforcement Monitoring Facility, LEMF, a first request message and sending a second request message to a user register. The first request message includes a target identifier comprising a known identity of an LI target and a request for additional identities associated with the known identity. The second request message is requesting additional identities associated with the known identity. The second communication device comprises interface circuitry, at least one processor and memory comprising instructions which when performed by the at least one processor cause the communication device to host a user register and to perform user register operations. The user register operations comprise receiving a request message from a lawful interception, LI, administrative function, ADMF, obtaining from the user register at least one additional identity associated with the known identity and sending a message to a lawful interception delivery function, LI DF. The request message is requesting additional identities associated with a known identity of an LI target. The message includes said at least one additional identity associated with the known identity obtained from the user register. The third communication device comprises interface circuitry, at least one processor and memory comprising instructions which when performed by the at least one processor cause the communication device to perform lawful interception delivery function operations. The lawful interception delivery function operations comprise receiving a message from a user register and sending an intercept related information, IRI, message to a Law Enforcement Monitoring Facility, LEMF. The message received from the user register includes at least one additional identity associated with a known identity of an LI target. The IRI message includes said at least one additional identity associated with the known identity.

Embodiments of the invention will now be described, by way of example only, with reference to the accompanying drawings.

### BRIEF DESCRIPTION OF THE DRAWINGS

Figure 1 is a block diagram of an exemplary LI network and system according to prior art;
Figures 2 to 5 are flowcharts illustrating embodiments of method steps;
Figures 6 to 8 are block diagrams illustrating embodiments of communication devices; and
Figures 9 and 10 are block diagrams illustrating embodiments of a lawful interception system.

### DETAILED DESCRIPTION

The same reference numbers are used for corresponding features in different embodiments.

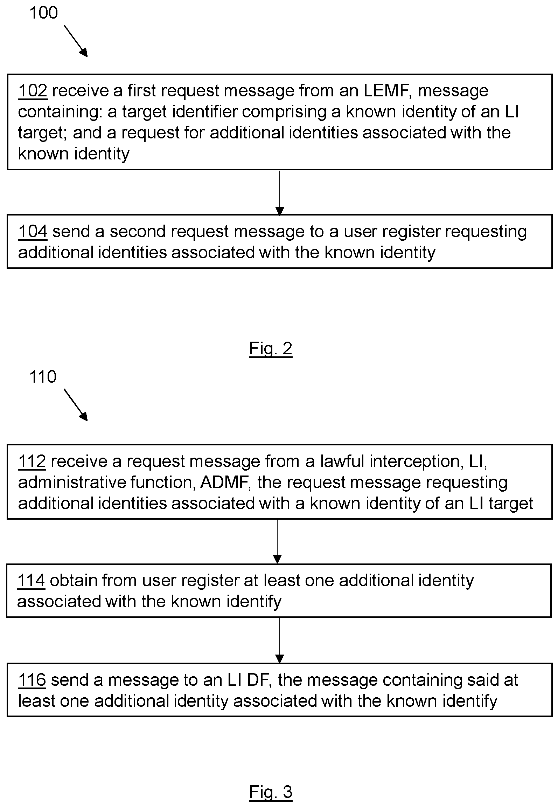

Referring to Figures 2 to 4, an embodiment provides a method 100, 110, 120 of establishing lawful interception, LI, of an LI target within a telecommunication network. The method comprises steps performed at a communication hosting an LI administrative function, ADMF, steps performed at a communication device hosting a user register and steps performed at a communication device hosting an LI delivery function, DF.

The method comprises, at the communication device hosting the LI ADMF, receiving 102 from a Law Enforcement Monitoring Facility, LEMF, a first request message. The first request message includes:
- a target identifier comprising a known identity of an LI target; and
- a request for additional identities associated with the known identity.

The method further comprises sending a second request message to a user register, the second request message requesting additional identities associated with the known identity. The known identity is an identity known/registered by a law enforcement agency, LEA, and thus is known/registered by the LEMF for the purpose of LI. The additional identities are known by/registered in the user register but are unknown by the LEA and LEMF at the time of the LEMF sending the first request message to the LI ADMF.

The method additionally comprises, at the communication device hosting the user register, receiving 112 the second request message and obtaining 114 from the user register at least one additional identity associated with the known identity. A message is then sent, by the communication device hosting the user register to a lawful interception delivery function, LI DF. The message includes the at least one additional identity associated with the known identity that has been obtained from the user register.

The method additionally comprises, at the communication device hosting the LI DF, receiving 122 the message from the user register and sending 124 an intercept related information, IRI, message to the LEMF. The IRI message includes the at least one additional identity associated with the known identity, as received in the message from the user register.

In an embodiment, the known identity is for a first network operating using a first network technology and at least one additional identity is for another network operating using a different network technology to the first network technology.

In an embodiment, the known identity is a subscriber identity. A subscriber identity is an identifier used to identify a subscriber within a communications network. Additional identities are a subscriber technical identity. The additional identities are different identities to the known identity.

In an embodiment, the subscriber identity is at least one of a Subscriber Permanent Identifier, SUPI, a Generic Public Subscription Identifier, GPSI, a Permanent Equipment Identifier, PEI, a Mobile Station International Subscriber Directory Number, MSISDN, an international mobile subscriber identity, IMSI, a Session Initiation Protocol, SIP, Uniform Resource Identifier, URI, a telephone URI, TEL URI, a GPSI, an Internet Protocol, IP, multimedia private identity, IMPI, an IP multimedia public identity, IMPU, a globally routable user agent URI, GRUU, or a wildcarded public user identity expressing a set of IMPU.

In an embodiment, additional identities may also be equipment identifiers, for example, an International Mobile Equipment Identity, IMEI, an IMEI software-version, IMEISV, or a permanent equipment identifier, PEI.

In an embodiment, the first request message is received on an LI Handover Interface 1, LI HI1 interface. The second request message is sent on an LI X1 interface. The message sent from the user register to the LI DF is sent on an LI X2 interface. The IRI message is sent on an LI Handover Interface 2, LI HI2 interface.

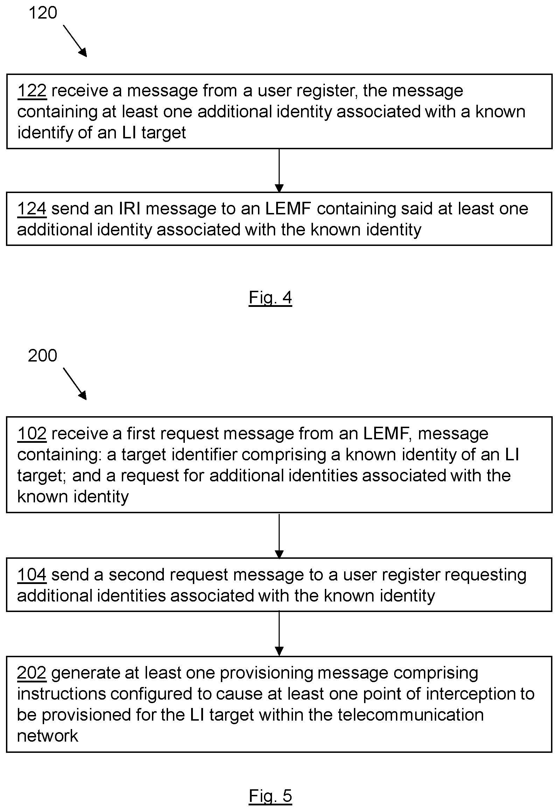

Referring to Figure 5, in an embodiment the method 200 further comprises generating 202 at least one provisioning message. The provisioning message comprises instructions configured to cause at least one point of interception to be provisioned for the LI target within the telecommunication network.

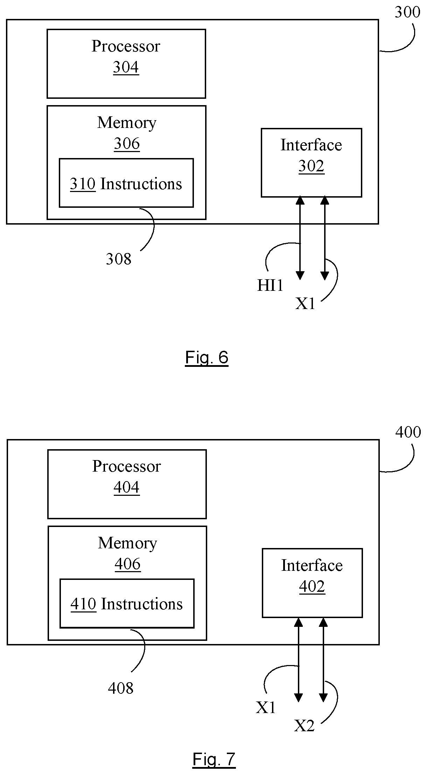

Referring to Figure 6, an embodiment provides a communication device 300 comprising interface circuitry 302, a processor 304 and memory 306. The memory comprises instructions 310 which when performed by the processor cause the communication device to perform lawful interception, LI, administrative function, ADMF operations.

The LI ADMF operations comprise receiving a first request message from a Law Enforcement Monitoring Facility, LEMF, and sending a second request message to a user register.

The first request message includes a target identifier comprising a known identity of an LI target and a request for additional identities associated with the known identity. The second request message is requesting the user register for additional identities associated with the known identity provided by the LI ADMF.

In an embodiment, the known identity is for a first network operating using a first network technology and at least one additional identity is for another network operating using a different network technology to the first network technology. In an embodiment, the known identity is a subscriber identity and additional identities are a subscriber identity, wherein the additional identities are different identities to the known identity.

In an embodiment, the known identity is at least one of a Subscriber Permanent Identifier, SUPI, a Generic Public Subscription Identifier, GPSI, and a Permanent Equipment Identifier, PEI, a Mobile Station International Subscriber Directory Number, MSISDN, a Session Initiation Protocol, SIP, Uniform Resource Identifier, URI, a telephone URI, TEL URI, a GPSI, an Internet Protocol, IP, multimedia private identity, IMPI, an IP multimedia public identity, IMPU, a globally routable user agent URI, GRUU, or a wildcarded public user identity expressing a set of IMPU.

In an embodiment, the first request message is received on an LI Handover Interface 1, LI HI1, interface. The second request message is sent on an LI X1 interface.

In an embodiment, the LI ADMF operations further comprise generating at least one provisioning message comprising instructions configured to cause at least one point of interception to be provisioned for the LI target within the telecommunication network.

Referring to Figure 6, an embodiment provides a computer program 308 comprising instructions 310 which, when executed by at least one processor cause the at least one processor to perform LI ADMF operations of:
receiving from an LEMF a first request message containing:
   - a target identifier comprising a known identity of an LI target; and
   - a request for additional identities associated with the known identity ; and
sending a second request message to a user register requesting additional identities associated with the known identity.

Referring to Figure 7, an embodiment provides a communication device 400 comprising interface circuitry 402, a processor 404 and memory 406. The memory comprises instructions 410 which when performed by the processor cause the communication device to perform user register operations.

The user register operations comprise receiving a request message from an LI ADMF. The request message is requesting additional identities associated with a known identity of an LI target. The user register operations further comprise obtaining from the user register at least one additional identity associated with the known identity and sending a message to a lawful interception delivery function, LI DF. The message includes the at least one additional identity associated with the known identity obtained from the user register.

In an embodiment, the request message is received on an LI X1 interface and the message sent to the LI DF is sent on an LI X2 interface.

Referring to Figure 7, an embodiment provides a computer program 408 comprising instructions 410 which, when executed by at least one processor cause the at least one processor to perform user register operations of:
receiving a request message from an LI ADMF, the request message requesting additional identities associated with a known identity of an LI target;
obtaining from the user register at least one additional identity associated with the known identity; and
sending a message to an LI DF, the message containing said at least one additional identity associated with the known identity obtained from the user register.

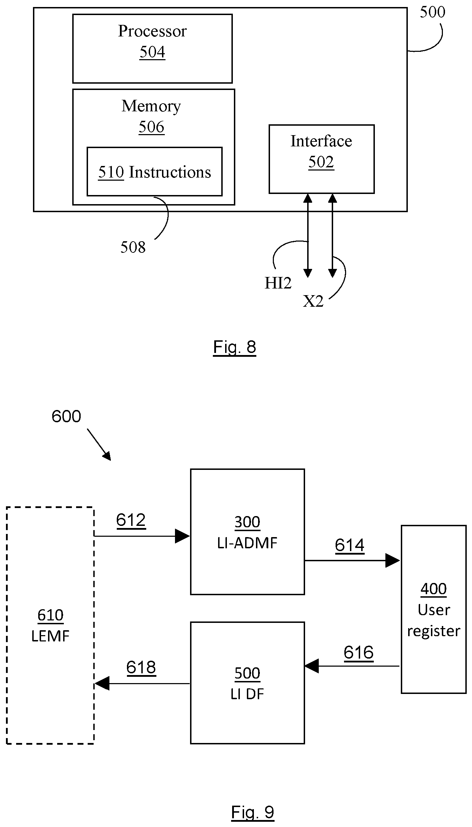

Referring to Figure 8, an embodiment provides a communication device 500 comprising interface circuitry 502, a processor 504 and memory 506. The memory comprises instructions 510 which when performed by the processor cause the communication device to perform lawful interception delivery function, LI DF, operations.

The LI DF operations comprise receiving a message from a user register and sending an intercept related information, IRI, message to a Law Enforcement Monitoring Facility, LEMF. The message received from the user register includes at least one additional identity associated with a known identity of an LI target. The IRI message includes the at least one additional identity associated with the known identity received in the message from the user register.

In an embodiment, the message from the user register is received on an LI X2 interface and the IRI message is sent on an LI Handover Interface 2, LI HI2, interface.

Referring to Figure 8, an embodiment provides a computer program 508 comprising instructions 510 which, when executed by at least one processor cause the at least one processor to perform LI DF operations of:
receiving a message from a user register, the message containing at least one additional identity associated with an LI target; and
sending an IRI message to an LEMF containing said at least one additional identity associated with the known identity.

Referring to Figure 9, an embodiment provides a lawful interception, LI, system 600 comprising a first communication device, LI-ADMF 300, a second communication device, user register 400, and a third communication device, LI DF 500, as described above with reference to Figures 6 to 8.

Referring to the messages described above with reference to Figures 6 to 8:
- the LI ADMF 300 receives a first request message 612 from an LEMF 610 and sends a second request message 614 to the user register 400.
- the user register 400 receives the second request message 614 and sends a message 616 to the LI DF 500.
- the LI DF receives the message 616 from the user register and sends an IRI message 618 to the LEMF.

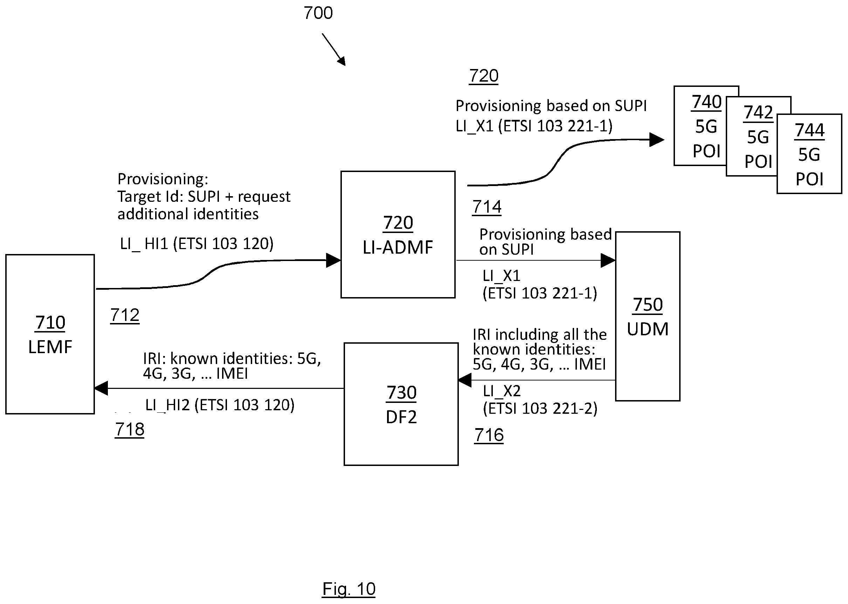

Referring to Figure 10, an embodiment provides a lawful interception, LI, system 700 comprising a first communication device, LI-ADMF 720, a second communication device, UDM 750, and a third communication device, DF2 730, as described above with reference to Figures 6 to 8. The LI system 700 additionally comprises an LEMF 710 and network element points of interception, POI, 740, 742, 744.

In this example, LEA personnel identify a lawful interception, LI, target. The LEA knows the 5G Subscription Permanent Identifier, SUPI, of the LI target. With the SUPI the LEA can start LI monitoring of the LI target.

The LEA issues a warrant for interception of the target using the known identity of the LI target, in this case the SUPI. This is effected by the LEMF 710 sending a first request message to the LI-ADMF on the LI Handover Interface 1, LI HI1, interface.

The warrant is activated on all 5G network elements ("points of interception, POI") on the Unified Data Management, UDM, and other relevant nodes of the telecommunication network for the specified known SUPI.

This is effected by the LI-ADMF sending a message 720 on the LI_X1 interface to all involved 5G network elements to provision the POIs to perform the interception on the LI target. The LI monitoring of the target will then start through the POIs using the known SUPI.

The LI-ADMF additionally sends a second request message 714 to the user register, in this example a 5G Unified Data Management, UDM, network element.

The UDM 750 receives the second request message from the LI-ADMF on the LI_X1 interface and retrieves any additional registered identity associated with the known SUPI; all additional registered identities are retrieved if there is more than one. The UDM then sends a message 716 on the LI_X2 interface to the delivery function 2, DF2 730, containing the retrieved additional registered identities.

The message sent by the UDM to the DF2 includes additional known identities associated with the known SUPI of the LI target.

The DF2 receives the message 716 on the LI-X2 interface from the UDM and reads the additional identities. The DF2 then sends an IRI message on the LI_HI2 interface. The IRI message includes the additional identities read from the message received from the UDM.

The LEA is then able to activate LI of the LI target for the additional identities received from the UDM, for example on other networks or on any other services being accessed by the LI target.

There are several use cases where without the proper internet protocol, IP, multimedia subsystem, IMS, identity an LI target cannot be monitored.

Various identities may be associated with IMS: IP multimedia private identity (IMPI), IP multimedia public identity (IMPU), globally routable user agent URI (GRUU), and wildcarded public user identity. Both IMPI and IMPU are not phone numbers or a series of digits, but uniform resource identifier (URIs). URIs can be digits (a Tel URI, such as tel:+1-234-567-8999) or alphanumeric identifiers (a SIP URI, such as sip:john.doe@example.com").

The IP Multimedia Private Identity (IMPI) is a unique permanently allocated global identity assigned by the home network operator, it has the form of an Network Access Identifier (NAI) i.e. user.name@domain, and is used, for example, for Registration, Authorization, Administration, and Accounting purposes. Every IMS user shall have one IMPI.

The IP Multimedia Public Identity (IMPU) is used by any user for requesting communications to other users (for example, this might be included on a business card). Also known as Address of Record (AOR). There can be multiple IMPU per IMPI. The IMPU can also be shared with another phone, so that both can be reached with the same identity (for example, a single phone-number for an entire family).

Globally Routable User Agent URI (GRUU) is an identity that identifies a unique combination of IMPU and UE instance. There are two types of GRUU: Public-GRUU (P-GRUU) and Temporary GRUU (T-GRUU). P-GRUU reveal the IMPU and are very long lived. T-GRUU do not reveal the IMPU and are valid until the contact is explicitly de-registered or the current registration expires.

A wildcarded Public User Identity expresses a set of IMPU grouped together.

In 4G LTE networks the HSS subscriber database includes the IMPU, IMPI, IMSI, MSISDN, subscriber service profiles, service triggers, and other information.

There is a flexible relationship between private and public identities. A private identity can correspond with several public ones, and theoretically the same public identity can be related with several private ones. Several public identities belonging to the same private identity can belong to an implicit registration set. This means that once a user registers one of the identities to a network, the network acts as if all of the identities are registered, so all of the identities have the same service profile and traffic behavior.

For example, for some services, each user can be created with three different Public Identities:
- a telephone number in TEL URI format -e.g. +123456789-
- a telephone number in SIP URI format -e.g. 123456789@telecomoperator.tel-
- an administrative number in SIP URI format -e.g. 123456789@telecomoperator.tel-

The relationships between these identities are stored in the HSS.

End users are not aware of the administrative number. As noted above, this is only used for Registration, Authorization, Administration, and Accounting purposes; users always dial the telephone number in either the TEL URI or SIP URI format, and they can also only see the telephone number of a UE calling them, e.g. through Caller ID Presentation.

LEAs are also likely only to know the telephone number of an LI target. However, for full LI monitoring of the target it may be necessary to also know administrative identities. For example, service border gateway, SBG, nodes only perform LI using an administrative number to identify an LI target. If a public identity is used as the known identity of an LI target, the LI target traffic (i.e. the content of communication) will not be intercepted by an SBG node. By providing any additional identities associated with a known identity of an LI target the LEA is able to provision full LI monitoring of the target.

Known LI method and systems are effective in monitoring an LI target in a 5G mobile network as long as the 5G coverage is good enough, but in the case of patchy 5G coverage, if the LI target moves around, network fallback to, for example a 4G network, can occur. After a fallback to 4G, to fully monitor the LI target the 4G identities of the LI target are needed. Similarly, movement of the LI target may result in a change to another network operating using a different network technology, for example from 4G to 5G. After a change to a different network technology to continue to monitor the LI target the technical identities of the LI target for the other network are needed.

The LI system 700 advantageously provisions all user identities of an target to the LEA, so that it is possible to activate (without any delay) lawful interception of the LI target on any service the LI target accesses, ensuring continuity of monitoring while the LI target moves around, including the cases of transition between networks operating using different technologies and including network fallback.

## Claims

1. A method (100, 110, 120, 200) of establishing lawful interception, LI, of an LI target within a telecommunication network, the method comprising:
at a communication device hosting an LI administrative function, ADMF:
receiving (102) on an LI Handover Interface 1 from a Law Enforcement Monitoring Facility, LEMF, a first request message containing:
- a target identifier comprising a known identity of an LI target, wherein the known identity is for a first network operating using a first mobile network technology; and
- a request for additional identities associated with the known identity; and
sending (104) on an LI X1 interface a second request message to a user register requesting additional identities associated with the known identity;
at a communication device hosting the user register:
receiving (112) the second request message;
obtaining (114) from the user register at least one additional identity associated with the known identity; and
sending (116) a message to a lawful interception delivery function, LI DF, the message containing said at least one additional identity associated with the known identity obtained from the user register; and
at a communication device hosting the LI DF:
receiving (122) the message from the user register on an LI X2 interface; and
sending (124) an intercept related information, IRI, message on an LI Handover Interface 2 to the LEMF containing said at least one additional identity associated with the known identity, wherein at least one additional identity of the additional identities is for another network operating using a different mobile network technology to the first mobile network technology.

2. The method of claim 1, wherein:
the known identity is a subscriber identity; and additional identities are a subscriber identity, wherein the additional identities are different identities to the known identity.

3. The method of claim 2, wherein the subscriber identity is at least one of Subscriber Permanent Identifier, SUPI, a Generic Public Subscription Identifier, GPSI, a Permanent Equipment Identifier, PEI, a Mobile Station International Subscriber Directory Number, MSISDN, an international mobile subscriber identity, IMSI, a Session Initiation Protocol, SIP, Uniform Resource Identifier, URI, a telephone URI, TEL URI, a GPSI, an Internet Protocol, IP, multimedia private identity, IMPI, an IP multimedia public identity, IMPU, a globally routable user agent URI, GRUU, or a wildcarded public user identity expressing a set of IMPU..

4. The method of any one of claims 1 to 3 further comprising generating (202) at least one provisioning message comprising instructions configured to cause at least one point of interception to be provisioned for the LI target within the telecommunication network.

5. A communication device (300) comprising interface circuitry (302), at least one processor (304) and memory (306) comprising instructions (310) which when performed by the at least one processor cause the communication device to perform lawful interception, LI, administrative function, ADMF operations of:
receiving on an LI Handover Interface 1 from a Law Enforcement Monitoring Facility, LEMF, a first request message containing:
- a target identifier comprising a known identity of an LI target, wherein the known identity is for a first network operating using a first mobile network technology; and
- a request for additional identities associated with the known identity; and
sending a second request message on an LI X1 interface to a user register requesting additional identities associated with the known identity, wherein at least one additional identity of the additional identities is for another network operating using a different mobile network technology to the first mobile network technology.

6. The communication device of claim 5, wherein:
the known identity is a subscriber identity; and additional identities are a subscriber identity, wherein the additional identities are different identities to the known identity.

7. The communication device of claim 6, wherein the subscriber identity is at least one of Subscriber Permanent Identifier, SUPI, a Generic Public Subscription Identifier, GPSI, a Permanent Equipment Identifier, PEI, a Mobile Station International Subscriber Directory Number, MSISDN, an international mobile subscriber identity, IMSI, a Session Initiation Protocol, SIP, Uniform Resource Identifier, URI, a telephone URI, TEL URI, a GPSI, an Internet Protocol, IP, multimedia private identity, IMPI, an IP multimedia public identity, IMPU, a globally routable user agent URI, GRUU, or a wildcarded public user identity expressing a set of IMPU.

8. The communication device of claims 6 or 7, wherein the LI ADMF operations further comprise generating at least one provisioning message comprising instructions configured to cause at least one point of interception to be provisioned for the LI target within a telecommunication network.

9. A communication device (400) comprising interface circuitry (402), at least one processor (404) and memory (406) comprising instructions (410) which when performed by the at least one processor cause the communication device to host a user register and to perform user register operations of:
receiving a request message on an LI X1 interface from a lawful interception, LI, administrative function, ADMF, the request message requesting additional identities associated with a known identity of an LI target, wherein the known identity is for a first network operating using a first mobile network technology;
obtaining from the user register at least one additional identity associated with the known identity; and
sending a message on an LI X2 interface to a lawful interception delivery function, LI DF, the message containing said at least one additional identity associated with the known identity obtained from the user register, wherein at least one additional identity is for another network operating using a different mobile network technology to the first mobile network technology.

10. A communication device (500) comprising interface circuitry (502), at least one processor (504) and memory (506) comprising instructions (510) which when performed by the at least one processor cause the communication device to perform lawful interception, LI, delivery function, DF, operations of:
receiving on an LI X2 interface a message from a user register, the message containing at least one additional identity associated with a known identity of an LI target, wherein the known identity is for a first network operating using a first mobile network technology; and
sending on an LI Handover Interface 2 an intercept related information, IRI, message to a Law Enforcement Monitoring Facility, LEMF, containing said at least one additional identity associated with the known identity, wherein at least one additional identity of the additional identities is for another network operating using a different mobile network technology to the first mobile network technology.

11. A computer program (308, 408, 508), comprising instructions (310, 410, 510) which, when executed on at least one processor (304, 404, 504), cause the at least one processor to carry out the method according to any one of claims 1 to 4.

12. A lawful interception, LI, system (600) comprising:
- a first communication device (300, 620) according to any one of claims 5 to 8;
- a second communication device (400, 650) according to claim 9; and
- a third communication device (500, 630) according to claim 10.

## Patentansprüche

1. Verfahren (100, 110, 120, 200) zum Einrichten rechtmäßigen Abhörens, LI, eines LI-Ziels innerhalb eines Telekommunikationsnetzwerks, wobei das Verfahren Folgendes umfasst:
an einer Kommunikationsvorrichtung, die eine LI-Verwaltungsfunktion, LI-ADMF, hostet:
Empfangen (102) einer ersten Anforderungsnachricht von einer Strafverfolgungsüberwachungseinrichtung, LEMF, auf einer LI-Übergabeschnittstelle 1, die Folgendes enthält:
- eine Zielkennung, die eine bekannte Identität eines LI-Ziels umfasst, wobei die bekannte Identität für ein erstes Netzwerk ist, das unter Verwendung einer ersten Mobilfunknetzwerktechnologie funktioniert; und
- eine Anforderung für zusätzliche Identitäten, die mit der bekannten Identität assoziiert sind; und
Senden (104) einer zweiten Nachricht auf einer LI-X1-Schnittstelle an ein Benutzerregister, die zusätzliche Identitäten anfordert, die mit der bekannten Identität assoziiert sind;
an einer Kommunikationsvorrichtung, die das Benutzerregister hostet:
Empfangen (112) der zweiten Anforderungsnachricht;
Erhalten (114) mindestens einer zusätzlichen Identität aus dem Benutzerregister, die mit der bekannten Identität assoziiert ist; und
Senden (116) einer Nachricht an eine Übermittlungsfunktion für rechtmäßiges Abhören, LI-DF, wobei die Nachricht die mindestens eine zusätzliche Identität enthält, die mit der bekannten Identität assoziiert ist, die aus dem Benutzerregister erhalten wird; und
an einer Kommunikationsvorrichtung, die die LI-DF hostet:
Empfangen (122) der Nachricht von dem Benutzerregister auf einer LI-X2-Schnittstelle; und
Senden (124) einer Nachricht mit abhörbezogenen Informationen, IRI, auf einer LI-Übergabeschnittstelle 2 an die LEMF, die die mindestens eine zusätzliche Identität enthält, die mit der bekannten Identität assoziiert ist, wobei die mindestens eine zusätzliche Identität der zusätzlichen Identitäten für ein anderes Netzwerk ist, das unter Verwendung einer von der ersten Mobilfunknetzwerktechnologie verschiedenen Mobilfunknetzwerktechnologie funktioniert.

2. Verfahren nach Anspruch 1, wobei:
die bekannte Identität eine Teilnehmeridentität ist; und zusätzliche Identitäten Teilnehmerkennungen sind, wobei die zusätzlichen Identitäten von der bekannten Identität verschiedene Identitäten sind.

3. Verfahren nach Anspruch 2, wobei die Teilnehmeridentität mindestens eine von einer permanenten Teilnehmerkennung, SUPI, einer generischen öffentlichen Abonnementkennung, GPSI, einer permanenten Gerätekennung. PEI, einer internationalen Teilnehmerverzeichnisnummer einer Mobilstation, MSISDN, einer internationalen Mobilteilnehmeridentität, IMSI, einem Sitzungseinleitungsprotokoll, SIP, einer Uniform Resource Identifier, URI, einer Telefon-URI, TEL-URI, einer GPSI, einer privaten Internetprotokoll-,IP-,Multimedia-Identität, IMPI, einer öffentlichen IP-Multimedia-Identität, IMPU, einer Global Routing User Agent-URI, GRUU, oder einer öffentlichen Benutzeridentität mit Platzhalter ist, die einen IMPU-Satz ausdrückt.

4. Verfahren nach einem der Ansprüche 1 bis 3, ferner umfassend Erzeugen (202) mindestens einer Bereitstellungsnachricht, die Anweisungen umfasst, die dazu ausgelegt sind, zu veranlassen, dass mindestens ein Abhörpunkt für das LI-Ziel innerhalb des Telekommunikationsnetzwerk bereitgestellt wird.

5. Kommunikationsvorrichtung (300), umfassend Schnittstellenschaltungsanordnung (302), mindestens einen Prozessor (304) und Speicher (306), der Anweisungen (310) umfasst, die bei Ausführung durch den mindestens einen Prozessor die Kommunikationsvorrichtung zum Durchführen von folgenden Operationen einer Verwaltungsfunktion, ADMF, für rechtmäßiges Abhören, LI, veranlassen:
Empfangen einer ersten Anforderungsnachricht von einer Strafverfolgungsüberwachungseinrichtung, LEMF, auf einer LI-Übergabeschnittstelle 1, die Folgendes enthält:
- eine Zielkennung, die eine bekannte Identität eines LI-Ziels umfasst, wobei die bekannte Identität für ein erstes Netzwerk ist, das unter Verwendung einer ersten Mobilfunknetzwerktechnologie funktioniert; und
- eine Anforderung für zusätzliche Identitäten, die mit der bekannten Identität assoziiert sind; und
Senden einer zweiten Anforderungsnachricht auf einer LI-X1-Schnittstelle ein Benutzerregister, die zusätzliche Identitäten anfordert, die mit der bekannten Identität assoziiert ist, wobei die mindestens eine zusätzliche Identität der zusätzlichen Identitäten für ein anderes Netzwerk ist, das unter Verwendung einer von der ersten Mobilfunknetzwerktechnologie verschiedenen Mobilfunknetzwerktechnologie funktioniert.

6. Kommunikationsvorrichtung nach Anspruch 5, wobei:
die bekannte Identität eine Teilnehmeridentität ist; und zusätzliche Identitäten Teilnehmerkennungen sind, wobei die zusätzlichen Identitäten von der bekannten Identität verschiedene Identitäten sind.

7. Kommunikationsvorrichtung nach Anspruch 6, wobei die Teilnehmeridentität mindestens eine von einer permanenten Teilnehmerkennung, SUPI, einer generischen öffentlichen Abonnementkennung, GPSI, einer permanenten Gerätekennung. PEI, einer internationalen Teilnehmerverzeichnisnummer einer Mobilstation, MSISDN, einer internationalen Mobilteilnehmeridentität, IMSI, einem Sitzungseinleitungsprotokoll, SIP, einer Uniform Resource Identifier, URI, einer Telefon-URI, TEL-URI, einer GPSI, einer privaten Internetprotokoll-,IP-,Multimedia-Identität, IMPI, einer öffentlichen IP-Multimedia-Identität, IMPU, einer Global Routing User Agent-URI, GRUU, oder einer öffentlichen Benutzeridentität mit Platzhalter ist, die einen IMPU-Satz ausdrückt.

8. Kommunikationsvorrichtung nach Anspruch 6 oder 7, wobei die LI-ADMF-Operationen ferner Erzeugen mindestens einer Bereitstellungsnachricht umfassen, die Anweisungen umfasst, die dazu ausgelegt sind, zu veranlassen, dass mindestens ein Abhörpunkt für das LI-Ziel innerhalb eines Telekommunikationsnetzwerk bereitgestellt wird.

9. Kommunikationsvorrichtung (400), umfassend Schnittstellenschaltungsanordnung (402), mindestens einen Prozessor (404) und Speicher (406), der Anweisungen (410) umfasst, die bei Ausführung durch den mindestens einen Prozessor die Kommunikationsvorrichtung zum Hosten eines Benutzerregisters und Durchführen von folgenden Benutzerregisteroperationen veranlassen:
Empfangen einer Anforderungsnachricht auf einer LI-X1-Schnittstelle von einer Verwaltungsfunktion, ADMF, für rechtmäßiges Abhören, LI, wobei die Anforderungsnachricht zusätzliche Identitäten anfordert, die mit einer bekannten Identität eines LI-Ziels assoziiert sind, wobei die bekannte Identität für ein erstes Netzwerk ist, das unter Verwendung einer ersten Mobilfunknetzwerktechnologie funktioniert;
Erhalten mindestens einer zusätzlichen Identität aus dem Benutzerregister, die mit der bekannten Identität assoziiert ist; und
Senden einer Nachricht auf einer LI-X2-Schnittstelle an eine Übermittlungsfunktion für rechtmäßiges Abhören, LI-DF, wobei die Nachricht die mindestens eine zusätzliche Identität umfasst, die mit der bekannten Identität assoziiert ist, die aus dem Benutzerregister erhalten wird, wobei mindestens eine zusätzliche Identität für ein anderes Netzwerk ist, das unter Verwendung einer von der ersten Mobilfunknetzwerktechnologie verschiedenen Mobilfunknetzwerktechnologie funktioniert.

10. Kommunikationsvorrichtung (500), umfassend Schnittstellenschaltungsanordnung (502), mindestens einen Prozessor (504) und Speicher (506), der Anweisungen (510) umfasst, die bei Ausführung durch den mindestens einen Prozessor die Kommunikationsvorrichtung zum Durchführen von folgenden Operationen einer Übermittlungsfunktion, DF, für rechtmäßiges Abhören, LI, veranlassen:
Empfangen einer Nachricht von einem Benutzerregister auf einer LI-X2-Schnittstelle, wobei die Nachricht mindestens eine zusätzliche Identität enthält, die mit einer bekannten Identität eines LI-Ziels assoziiert ist, wobei die bekannte Identität für ein erstes Netzwerk ist, das unter Verwendung einer ersten Mobilfunknetzwerktechnologie funktioniert; und
Senden einer Nachricht mit abhörbezogenen Informationen, IRI, auf einer LI-Übergabeschnittstelle 2 an eine Strafverfolgungsüberwachungseinrichtung, LEMF, die die mindestens eine zusätzliche Identität umfasst, die mit der bekannten Identität assoziiert ist, wobei mindestens eine zusätzliche Identität der zusätzlichen Identitäten für ein anderes Netzwerk ist, das unter Verwendung einer von der ersten Mobilfunknetzwerktechnologie verschiedenen Mobilfunknetzwerktechnologie funktioniert.

11. Computerprogramm (308, 408, 508), umfassend Anweisungen (310, 410, 510), die bei Ausführung auf mindestens einem Prozessor (304, 404, 504) den mindestens einen Prozessor zum Durchführen des Verfahrens nach einem der Ansprüche 1 bis 4 veranlassen.

12. System (600) für rechtmäßiges Abhören, LI, umfassend:
- eine erste Kommunikationsvorrichtung (300, 620) nach einem der Ansprüche 5 bis 8;
- eine zweite Kommunikationsvorrichtung (400, 650) nach Anspruch 9; und
- eine dritte Kommunikationsvorrichtung (500, 630) nach Anspruch 10.

## Revendications

1. Procédé (100, 110, 120, 200) d'établissement d'une interception licite, LI, d'une cible LI dans un réseau de télécommunication, le procédé comprenant :
au niveau d'un dispositif de communication hébergeant une fonction administrative, ADMF, LI :
la réception (102), sur une interface de transfert intercellulaire LI 1 depuis une installation de surveillance d'application de la loi, LEMF, d'un premier message de demande contenant :
- un identifiant cible comprenant une identité connue d'une cible LI, dans lequel l'identité connue est pour un premier réseau fonctionnant à l'aide d'une première technologie de réseau mobile ; et
- une demande d'identités supplémentaires associées à l'identité connue ; et
l'envoi (104), sur une interface X1 LI, d'un deuxième message de demande à un registre d'utilisateurs demandant des identités supplémentaires associées à l'identité connue ;
au niveau d'un dispositif de communication hébergeant le registre d'utilisateurs :
la réception (112) du deuxième message de demande ;
l'obtention (114), depuis le registre d'utilisateurs, d'au moins une identité supplémentaire associée à l'identité connue ; et l'envoi (116) d'un message à une fonction de livraison d'interception licite, DF LI, du message contenant ladite au moins une identité supplémentaire associée à l'identité connue obtenue depuis le registre d'utilisateurs ; et
au niveau d'un dispositif de communication hébergeant la DF LI :
la réception (122) du message depuis le registre d'utilisateurs sur une interface X2 LI ; et
l'envoi (124) d'un message d'informations relatives à une interception, IRI, sur une interface de transfert intercellulaire LI 2 à la LEMF contenant ladite au moins une identité supplémentaire associée à l'identité connue, dans lequel au moins une identité supplémentaire parmi les identités supplémentaires est pour un autre réseau fonctionnant à l'aide d'une technologie de réseau mobile différente de la première technologie de réseau mobile.

2. Procédé selon la revendication 1, dans lequel :
l'identité connue est une identité d'abonné ; et des identités supplémentaires sont une identité d'abonné, dans lequel les identités supplémentaires sont des identités différentes de l'identité connue.

3. Procédé selon la revendication 2, dans lequel l'identité d'abonné est au moins l'une parmi un identifiant permanent d'abonné, SUPI, un identifiant d'abonnement public générique, GPSI, un identifiant d'équipement permanent, PEI, un numéro de répertoire d'abonné international de station mobile, MSISDN, une identité d'abonné mobile internationale, IMSI, un protocole d'initiation de session, SIP, un identifiant de ressource uniforme, URI, un URI téléphonique, TEL URI, un GPSI, une identité privée multimédia de protocole Internet, IP, IMPI, une identité publique multimédia IP, IMPU, un URI d'agent utilisateur pouvant être acheminé mondialement, GRUU, et une identité d'utilisateur public de remplacement exprimant un ensemble d'IMPU.

4. Procédé selon l'une quelconque des revendications 1 à 3, comprenant en outre la génération (202) d'au moins un message de fourniture comprenant des instructions configurées pour amener au moins un point d'interception à être fourni pour la cible LI dans le réseau de télécommunications.

5. Dispositif de communication (300) comprenant une circuiterie d'interface (302), au moins un processeur (304) et une mémoire (306) comprenant des instructions (310) qui, lorsqu'elles sont réalisées par l'au moins un processeur, amènent le dispositif de communication à réaliser les opérations suivantes de fonction administrative, ADMF, d'interception licite, LI :
la réception, sur une interface de transfert intercellulaire LI 1 depuis une installation de surveillance d'application de la loi, LEMF, d'un premier message de demande contenant :
- un identifiant cible comprenant une identité connue d'une cible LI, dans lequel l'identité connue est pour un premier réseau fonctionnant à l'aide d'une première technologie de réseau mobile ; et
- une demande d'identités supplémentaires associées à l'identité connue ; et
l'envoi, sur une interface X1 LI, d'un deuxième message de demande à un registre d'utilisateurs demandant des identités supplémentaires associées à l'identité connue, dans lequel au moins une identité supplémentaire parmi les identités supplémentaires est pour un autre réseau fonctionnant à l'aide d'une technologie de réseau mobile différente de la première technologie de réseau mobile.

6. Dispositif de communication selon la revendication 5, dans lequel :
l'identité connue est une identité d'abonné ; et des identités supplémentaires sont une identité d'abonné, dans lequel les identités supplémentaires sont des identités différentes de l'identité connue.

7. Dispositif de communication selon la revendication 6, dans lequel l'identité d'abonné est au moins l'une parmi un identifiant permanent d'abonné, SUPI, un identifiant d'abonnement public générique, GPSI, un identifiant d'équipement permanent, PEI, un numéro de répertoire d'abonné international de station mobile, MSISDN, une identité d'abonné mobile internationale, IMSI, un protocole d'initiation de session, SIP, un identifiant de ressource uniforme, URI, un URI téléphonique, TEL URI, un GPSI, une identité privée multimédia de protocole Internet, IP, IMPI, une identité publique multimédia IP, IMPU, un URI d'agent utilisateur pouvant être acheminé mondialement, GRUU, et une identité d'utilisateur public de remplacement exprimant un ensemble d'IMPU.

8. Dispositif de communication selon la revendication 6 ou 7, dans lequel les opérations ADMF LI comprennent en outre la génération d'au moins un message de fourniture comprenant des instructions configurées pour amener au moins un point d'interception à être fourni pour la cible LI dans le réseau de télécommunications.

9. Dispositif de communication (400) comprenant une circuiterie d'interface (402), au moins un processeur (404) et une mémoire (406) comprenant des instructions (410) qui, lorsqu'elles sont réalisées par l'au moins un processeur, amènent le dispositif de communication à héberger un registre d'utilisateurs et à réaliser les opérations suivantes de registre d'utilisateurs :
la réception d'un message de demande, sur une interface X1 LI depuis une fonction administrative, ADMF, d'interception licite, LI, le message de demande demandant des identités supplémentaires associées à une identité connue d'une cible LI, dans lequel l'identité connue est pour un premier réseau fonctionnant à l'aide d'une première technologie de réseau mobile ;
l'obtention, depuis le registre d'utilisateurs, d'au moins une identité supplémentaire associée à l'identité connue ; et
l'envoi d'un message, sur une interface X2 LI à une fonction de livraison d'interception licite, DF LI, du message contenant ladite au moins une identité supplémentaire associée à l'identité connue obtenue depuis le registre d'utilisateurs, dans lequel au moins une identité supplémentaire est pour un autre réseau fonctionnant à l'aide d'une technologie de réseau mobile différente de la première technologie de réseau mobile.

10. Dispositif de communication (500) comprenant une circuiterie d'interface (502), au moins un processeur (504) et une mémoire (506) comprenant des instructions (510) qui, lorsqu'elles sont réalisées par l'au moins un processeur, amènent le dispositif de communication à réaliser les opérations suivantes de fonction de livraison, DF, d'interception licite, LI :
la réception, sur une interface X2 LI, d'un message depuis un registre d'utilisateurs, le message contenant au moins une identité supplémentaire associée à une identité connue d'une cible LI, dans lequel l'identité connue est pour un premier réseau fonctionnant à l'aide d'une première technologie de réseau mobile ; et
l'envoi, sur une interface de transfert intercellulaire LI 2, d'un message d'informations relative à une interception, IRI, à une installation de surveillance d'application de la loi, LEMF, contenant ladite au moins une identité supplémentaire associée à l'identité connue, dans lequel au moins une identité supplémentaire parmi les identités supplémentaires est pour un autre réseau fonctionnant à l'aide d'une technologie de réseau mobile différente de la première technologie de réseau mobile.

11. Programme informatique (308, 408, 508), comprenant des instructions (310, 410, 510) qui, lorsqu'elles sont exécutées sur au moins un processeur (304, 404, 504), amènent l'au moins un processeur à réaliser le procédé selon l'une quelconque des revendications 1 à 4.

12. Système d'interception licite, LI, (600) comprenant :
- un premier dispositif de communication (300, 620) selon l'une quelconque des revendications 5 à 8 ;
- un deuxième dispositif de communication (400, 650) selon la revendication 9 ; et
- un troisième dispositif de communication (500, 630) selon la revendication 10.
